(19) Europäisches Patentamt
European Patent Office
Office européen des brevets

(11) Veröffentlichungsnummer : **0 065 203**
**B1**

(12) # EUROPÄISCHE PATENTSCHRIFT

(45) Veröffentlichungstag der Patentschrift : **30.01.85**

(51) Int. Cl.[4] : **C 03 C 17/28**, C 03 C 17/34, C 03 C 17/32

(21) Anmeldenummer : **82103850.2**

(22) Anmeldetag : **05.05.82**

(54) **Verfahren zur splittersicheren Beschichtung von Glasoberflächen.**

(30) Priorität : **14.05.81 DE 3119151**

(43) Veröffentlichungstag der Anmeldung : **24.11.82 Patentblatt 82/47**

(45) Bekanntmachung des Hinweises auf die Patenterteilung : **30.01.85 Patentblatt 85/05**

(84) Benannte Vertragsstaaten : **DE FR GB IT**

(56) Entgegenhaltungen :
**DE-A- 2 725 294**
**DE-A- 2 731 776**
**DE-A- 2 732 062**
**DE-A- 2 755 029**
**DE-B- 1 621 883**

(73) Patentinhaber : **BAYER AG**
**Konzernverwaltung RP Patentabteilung**
**D-5090 Leverkusen 1 Bayerwerk (DE)**

(72) Erfinder : **Wieczorrek, Wolfhart, Ing. grad.**
**Egerstrasse 6**
**D-5000 Köln 90 (DE)**
Erfinder : **Mennicken, Gerhard, Dr.**
**Am Wasserturm 16**
**D-5090 Leverkusen 3 (DE)**

**EP 0 065 203 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein verbessertes Verfahren zur Beschichtung von Glasoberflächen, insbesondere von Glasflaschen, zwecks Verbesserung der Splittersicherheit.

Das Überziehen von Glasflächen, insbesondere von Glasflaschen, mit einer transparenten Polyurethanschicht zur Verbesserung der Splittersicherheit ist bekannt und Gegenstand einer Reihe von Veröffentlichungen (vgl. DE-A-2 731 176, 2 746 017 oder 2 746 006).

Diesen Veröffentlichungen gemeinsam ist die Beschichtung der Glasoberflächen mit lösungsmittelfreien Zweikomponenten-Beschichtungsmassen, wobei man vor der Beschichtung der Glasoberflächen diese mit einer wäßrigen oder alkoholischen Silanschlichte behandelt, um so eine bessere Haftung des Lacks am Glas zu erreichen. In der Praxis ist es zwecks Gewährleistung der vollen haftverbessernden Wirkung dieser Vorbehandlung üblich, die mit dem Haftvermittler vorbehandelte Glasoberfläche bei Temperaturen um ca. 100 °C zu trocknen. Die im zweiten Arbeitsgang aufgetragene Beschichtungsmasse enthält neben dem Zweikomponenten-Polyurethansystem und den üblichen Hilfs- und Zusatzmitteln insbesondere die Aushärtung des Bindemittels, d. h. die Isocyanat-additionsreaktion beschleunigende Katalysatoren. Von großem praktischem Nachteil ist hierbei, daß die Zweikomponenten-Polyurethan-Beschichtungsmassen wegen der Anwesenheit der Katalysatoren nur eine stark reduzierte Verarbeitungszeit aufweisen.

Es ist aus der DE-B-1 621 883 zwar bereits bekannt, daß man auf mit lösungsmittelhaltigem Polyurethanlack zu beschichtende Oberflächen zunächst eine Lackschicht auftragen kann, die einen die Isocyanatadditionsreaktion beschleunigenden Katalysator enthält, um anschließend die so erhaltene Lackschicht mit einem lösungsmittelhaltigen, katalysatorenfreien Zweikomponenten-Polyurethanlack zu beschichten. Dabei wird die erste Lackschicht angelöst und der Katalysator durch Konvektion teilweise in den Decklack gefördert, wo er wirksam wird.

Es wurde nun überraschenderweise gefunden, daß sich dieses Prinzip auch bei lösungsmittelfreien Beschichtungsmassen anwenden läßt, wie sie zur Beschichtung von Glasoberflächen zum Einsatz gelangen. Außerdem wurde gefunden, daß der hierzu zum Einsatz gelangende Grundlack auch gleichzeitig die bekannten Haftvermittler auf Silanbasis enthalten kann, und daß ein Einbrennen des Grundlacks dann überflüssig ist, wenn der Grundlack gleichzeitig ein Bindemittel auf Basis eines linearen Polyurethan-Polyharnstoffs der nachstehend näher beschriebenen Art enthält. Ein weiterer Vorteil, der mit der Verwendung eines derartigen Grundlacks verbunden ist, ist in der erhöhten mechanischen Festigkeit der gesamten Beschichtung zu sehen, da die gleichzeitige Verwendung eines, einen ausreagierten Polyurethan-Polyharnstoff als Bindemittel enthaltenden Grundlacks und eines ein Zweikomponenten-Polyurethansystem als Bindemittel enthaltenden Beschichtungsmittels zu einem besonders günstigen Verbundsystem führt.

Der beim nachstehend näher beschriebenen erfindungsgemäßen Verfahren eingesetzte Grundlack erfüllt somit drei Funktionen :

1. Verbesserung der Haftung der organischen Beschichtung auf Glas ;
2. Katalysierung der Härtungsreaktion der organischen Beschichtung ;
3. Verbesserung des durch die Beschichtung angestrebten Splitterschutzes.

Gegenüber den bisher bekannten Arbeitsweise ergeben sich dadurch folgende Vorteile :

1. Das Trocknen der Silanschichten bei höheren Temperaturen entfällt, dadurch Energieeinsparung ;
2. Bessere Anpassung der mechanischen Filmeigenschaften an die spezifischen Anforderungen für den Splitterschutz, dadurch größerer Spielraum in der Formulierung des Beschichtungsmittels ;
3. Verlängerung der Verarbeitungszeit des Decklacks um den Faktor 15 oder mehr, dadurch einfachere Handhabung und größere Produktionssicherheit.

Gegenstand der Erfindung ist somit ein Verfahren zur splittersicheren Beschichtung von Glasoberflächen durch Auftragen eines physikalisch trocknenden, einen Silan-Haftvermittler enthaltenden Grundlackes und anschließende Beschichtung der so hergestellten, physikalisch getrockneten Grundlackschicht mit einem lösungsmittelfreien bzw. -armen, ein zu einem Polyurethan ausreagierenden Zweikomponenten-System als Bindemittel und gegebenenfalls übliche Hilfs- und Zusatzmittel enthaltenden Beschichtungsmittel, dadurch gekennzeichnet, daß der Grundlack

a) als Bindemittel einen in Lacklösungsmitteln löslichen Polyurethan-Polyharnstoff mit linearem Molekularaufbau und außerdem

b) mindestens einen die zur Aushärtung des Beschichtungsmittels führende Isocyanatadditionsreaktion beschleunigenden Katalysator

enthält.

Der beim erfindungsgemäßen Verfahren einzusetzende Grundlack besteht im wesentlichen aus 4 Komponenten :

a) einem geeigneten Lösungsmittel bzw. Lösungsmittelgemisch,

b) einem in dem Lösungsmittel löslichen, elastomeren Polyurethan-Polyharnstoff mit im wesentlichen linearem Molekularaufbau, welcher im allgemeinen in einer Menge von 5 bis 25 Gew.-%, bezogen auf Gesamtgewicht des Grundlacks, zum Einsatz gelangt,

c) einem Silan-Haftvermittler, welcher im allgemeinen in einer Menge von 0,2 bis 3 Gew.-%, bezogen auf Gesamtgewicht des Grundlacks, zum Einsatz gelangt und

d) mindestens einem die Isocyanatadditionsreaktion des Beschichtungsmittels beschleunigenden Katalysator, der im allgemeinen in einer Gesamtmenge von 0,2 bis 2 Gew.-%, bezogen auf Gesamtgewicht des Grundlacks, zum Einsatz gelangt.

Geeignete Lösungsmittel a) sind die üblichen Lacklösungsmittel wie z. B. Ethylacetat, Butylacetat, Methylglykol-acetat, Ethylglykol-acetat, Toluol, Xylol und/oder Alkohole wie Ethanol oder Isopropanol.

Geeignete Polyurethan-Polyharnstoffe b) sind insbesondere solche auf Basis von (i) aliphatischen bzw. cycloaliphatischen Diisocyanaten, (ii) Polyesterdiolen des Molekulargewichtsbereichs 1 000 bis 2 500 und (iii) aliphatischen bzw. cycloaliphatischen diprimären Diaminen.

Bei der Isocyanatkomponente (i) handelt es sich um aliphatische oder cycloaliphatische Diisocyanate des Molekulargewichtsbereichs 168-300, wie sie in der Polyurethanchemie an sich bekannt sind. Beispiele geeigneter Diisocyanate sind Hexamethylendiisocyanat, 4,4'-Diisocyanato-dicyclohexylmethan oder 1-Isocyanato-3,3,5-trimethyl-5-isocyanatomethyl-cyclohexan (Isophorondiisocyanat, abgekürzt IPDI). IPDI ist besonders bevorzugt.

Bei den Polyesterdiolen handelt es sich vorzugsweise um solche des Molekulargewichtsbereichs 1 000 bis 2 500, insbesondere 2 100 bis 2 400, wie sie durch Umsetzung von Dicarbonsäuren wie Bernsteinsäure, Adipinsäure, oder Suberinsäure mit überschüssigen Mengen einfacher Glykole wie Ethylenglykol, 1,4-Dihydroxy-butan und/oder 1,6-Dihydroxy-hexan erhältlich sind.

Bei den Diaminen (iii) handelt es sich um aliphatische oder cycloaliphatische Diamine des Molekulargewichtsbereichs 60-300 wie z. B. Ethylendiamin, Tetramethylendiamin, Hexamethylendiamin, 4,4'-Diamino-dicyclohexylmethan oder insbesondere 1-Amino-3,3,5-trimethyl-5-aminomethyl-cyclohexan (Isophorondiamin, abgekürzt IPDA).

Die Herstellung der Polyurethanpolyharnstoffe erfolgt im allgemeinen dergestalt, daß man zunächst aus dem Polyesterdiol und dem Diisocyanat unter Verwendung eines Diisocyanat-Überschusses ein NCO-Präpolymer herstellt, welches anschließend mit dem Diamin (III) kettenverlängert wird. Es handelt sich bei den Polyurethanpolyharnstoffen um ausreagierte Verbindungen, d. h. die Reaktionspartner kommen im allgemeinen in solchen Mengen zum Einsatz, daß das Äquivalentverhältnis zwischen Isocyanatgruppen einerseits und Hydroxyl- und Aminogruppen andererseits zwischen 0,8 : 1 bis 1,2 : 1, vorzugsweise bei 1 : 1 liegt.

Bei dem Silan-Haftvermittler c) handelt es sich im allgemeinen um Verbindungen der Formel

$$Y—X—Si(OR)_3$$

in welcher

R für einen Alkylrest mit 1 bis 4 Kohlenstoffatomen und

X für einen Alkylenrest mit 2 bis 4 Kohlenstoffatomen und

Y für eine primäre Amino-, Hydroxyl-, Mercapto- oder 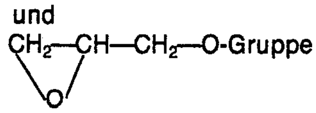-Gruppe steht.

Gut geeignet sind beispielsweise die in den o. g. Deutschen Offenlegungschriften genannten Silan-Haftvermittler.

Bei der Komponente d) handelt es sich um die üblichen aus der Polyurethanchemie bekannten Reaktionsbeschleuniger für die Isocyanat-Additionsreaktion wie z. B. tertiäre Amine wie N,N-Dimethylanilin oder Triethylendiamin und insbesondere um Zinn- oder Zink-organische Verbindungen wie Zinn-(II)-octoat, Dibutylzinndilaurat oder Zinkoctoat.

Bei dem beim erfindungsgemäßen Verfahren zum Einsatz gelangenden Beschichtungsmittel handelt es sich im allgemeinen um einen lösungsmittelfreien Klarlack der Viskosität 1 000 bis 8 000, vorzugsweise 1 000 bis 7 000 mPas/23 °C, der

a) als Bindemittel ein zu einem Polyurethan ausreagierendes Zweikomponenten-System und gegebenenfalls

b) übliche Hilfs- und Zusatzmittel wie Verlaufmittel, Stabilisatoren oder UV-Absorber enthält.

Das Bindemittel a) des Beschichtungsmittels besteht im allgemeinen aus einem Gemisch mindestens eines aliphatischen oder cycloaliphatischen Polyisocyanats mit mindestens einer organischen Polyhydroxylverbindung, wobei die Mengenverhältnisse der Reaktionspartner so gewählt werden, daß ein NCO/OH-Äquivalentverhältnis von 0,8 : 1 bis 1,2 : 1, vorzugsweise 1 : 1 vorliegt.

Als aliphatische bzw. cycloaliphatische Polyisocyanate eignen sich beispielsweise Biuretgruppen aufweisende Polyisocyanate, wie sie durch Biuretisierung von Hexamethylendiisocyanat erhältlich sind,

Isocyanuratgruppen aufweisende Polyisocyanate, wie sie durch Trimerisierung eines Teils der Isocyanatgruppen von Hexamethylendiisocyanat erhältlich sind, Isophorondiisocyanat, 4,4'-Diisocyanato-cyclohexylmethan oder Umsetzungsprodukte der zuletzt genannten einfachen Diisocyanate mit unterschüssigen Mengen an mehrwertigen Alkoholen des Molekulargewichtsbereichs 62-1 000, wie z. B. Ethylenglykol, Trimethylolpropan, 1,2-Dihydroxypropan oder Alkoxylierungs- insbesondere Propoxylierungsprodukten derartiger einfacher Polyole des genannten Molekulargewichtsbereichs.

Die Polyolkomponente des beim erfindungsgemäßen Verfahren einzusetzenden Beschichtungsmittels besteht im allgemeinen aus Polyester- oder insbesondere aus Polyetherpolyolen bzw. aus Gemischen derartiger Polyole, die im allgemeinen 2 bis 6, vorzugsweise 2 bis 3, Hydroxylgruppen aufweisen. Die Polyolkomponente weist im allgemeinen ein (mittleres) Molekulargewicht von 300 bis 2 000, vorzugsweise 450 bis 1 200 auf. Geeignete Polyesterpolyole sind bei beispielsweise solche der bereits oben beispielhaft genannten Art oder auch höherfunktionelle Polyesterpolyole, wie sie durch Umsetzung von Dicarbonsäuren der oben beispielhaft genannten Art und/oder Phthalsäure, Tetrahydrophthalsäure oder Hexahydrophthalsäure bzw. deren Anhydriden mit überschüssigen Mengen an Polyolen der oben bereits beispielhaft genannten Art und/oder höherwertigen Alkoholen wie Trimethylolpropan und/oder Glycerin erhältlich sind. Bei den besonders bevorzugt einzusetzenden Polyetheralkoholen handelt es sich im allgemeinen um Alkoxylierungs- d. h. Ethoxylierungs- und insbesondere Propoxylierungsprodukte von einfachen Startermolekülen der oben bereits beispielhaft genannten Art.

Auch mit unterschüssigen Mengen an Diisocyanaten der beispielhaft genannten Art modifizierte Polyetheralkohole sind gut verwendbar.

Die Einstellung der Viskosität des Beschichtungsmittels innerhalb der o. g. Bereiche kann durch geeignete Wahl der Ausgangskomponenten und insbesondere durch deren Modifizierung erfolgen. So kann beispielsweise gewünschtenfalls die Viskosität von einfachen Diisocyanaten wie IPDI durch Modifizierung mit unterschüssigen Mengen an Polyolen oder die Erhöhung der Viskosität von Polyetheralkoholen durch deren Modifizierung mit unterschüssigen Mengen an Diisocyanaten erfolgen. Andererseits kann die Viskosität des Beschichtungsmittels auch gewünschtenfalls durch Mitverwendung geringer Mengen (bis zu 15 Gew.-%) an üblichen Lacklösungsmitteln herabgesetzt werden, obwohl die Mitverwendung derartiger Lacklösungsmittel weniger bevorzugt ist.

Zur Durchführung des erfindungsgemäßen Verfahrens wird der Grundlack nach den üblichen Methoden der Lacktechnologie in einer solchen Menge aufgetragen, daß eine Trockenfilmdicke von ca. 0,005 bis 0,02, vorzugsweise 0,008 bis 0,015 mm resultiert. Die Beschichtung der Glasoberflächen mit dem Grundlack erfolgt im allgemeinen bei Raumtemperatur. Zur physikalischen Trocknung des Grundlacks ist es ausreichend, die Glasoberfläche bei Raumtemperatur während eines geeigneten Zeitraums zu lagern. Selbstverständlich kann die physikalische Trocknung des Grundlackes auch bei erhöhter Temperatur (bis zu 100 °C) erfolgen, jedoch ist dies nicht unbedingt erforderlich.

Die mit dem Grundlack versehenen Glasgegenstände können zu einem beliebig späteren Zeitpunkt mit dem Beschichtungsmittel versehen werden. Auch hier erfolgt der Auftrag nach den an sich bekannten Methoden der Lacktechnologie (Rakeln, Tauchen, Spritzen, Gießen, Streichen). Die Schichtdicke der 2. Beschichtung liegt im allgemeinen bei 0,1 bis 0,25, vorzugsweise 0,15 bis 0,18 mm. Die Aushärtung der Beschichtung kann durch 10- bis 30-minütiges Erhitzen der beschichteten Glasgegenstände auf ca. 110 bis 190 °C, vorzugsweise 120 bis 140 °C erfolgen.

Das erfindungsgemäße Verfahren eignet sich insbesondere zur splittersicheren Beschichtung von Glasflaschen.

In den nachfolgenden Beispielen beziehen sich alle Prozentangaben auf Gewichtsprozente.

In den nachfolgenden Beispielen wurden folgende Beschichtungsmittel eingesetzt :

Grundlack G1

0,5 Gew.-Teile γ-Aminopropyltriethoxysilan und 0,5 Gew.-Teile γ-Mercaptopropyltrimethoxysilan werden in 85 Gew.-Teilen eines Lösemittelgemisches aus Isopropanol, Toluol und Methylglykolacetat (170 : 145 : 25) gegeben. In dem erhaltenen Gemisch werden 15 Gew.-Teile eines nicht-reaktiven, linearen, elastomeren Polyurethan-Polyharnstoffs auf Basis von IPDI, einem Polyesterdiol des Molekulargewichts 2 250 aus Adipinsäure und 1,4-Dihydroxybutan und von IPDA als Kettenverlängerungsmittel gelöst.

Anschließend wird 1 Gew.-Teil Dibutylzinndilaurat untergemischt.

Grundlack G2

Zusammensetzung wie bei Grundlack G1, jedoch wird anstelle von Dibutylzinndilaurat 1 Gew.-Teil Zinkoctoat eingesetzt.

Grundlack G3

Zusammensetzung wie bei Grundlack G1, jedoch wird anstelle des obigen Silangemisches 1 Gew.-Teil γ-Aminopropyltriethoxysilan eingesetzt.

Beschichtungsmasse B1

Komponente I

Hydroxylgruppen aufweisendes Addukt aus 72 Gew.-Teilen eines trifunktionellen Polyetheralkohols des Molekulargewichts 450, hergestellt durch Propoxylierung von Trimethylolpropan, 20 Gew.-Teilen Polypropylenglykol des Molekulargewichts 2 000 und 8 Gew.-Teilen 4,4'-Diisocyanato-dicyclohexylmethan.

Komponente II

Isocyanatgruppen enthaltendes Addukt aus 8 Gew.-Teilen eines trifunktionellen Polyetheralkohols des Molekulargewichts 450, hergestellt durch Propoxylierung von Trimethylolpropan und 76 Gew.-Teilen 4,4'-Diisocyanatodicyclohexylmethan.

Zur Herstellung der Beschichtungsmasse B1 werden die Komponenten I und II im Gew.-Verhältnis 100 : 84 unter Zugabe von 0,5 % eines handelsüblichen Verlaufsmittels vermischt. Die Beschichtungsmasse B1 weist eine Viskosität von 1 500 mPas/23 °C auf.

Beschichtungsmasse B2

Komponente I

Hydroxylgruppen enthaltendes Addukt aus 100 Gew.-Teilen des bereits genannten trifunktionellen Polyetheralkohols des Molekulargewichts 450 und 9,7 Gew.-Teilen Hexamethylendiisocyanat.

Komponente II

Biuretpolyisocyanat mit einem NCO-Gehalt von 22 %, hergestellt durch Biuretisierung von Hexamethylendiisocyanat.

Komponenten I und II werden unter Zugabe von 0,5 % eines handelsüblichen Verlaufmittels im Gew.-Verhältnis 100 : 103 vermischt. Die Beschichtungsmasse B2 weist eine Viskosität von 6 500 mPas/23 °C auf.

Beschichtungsmasse B3

Komponente I

Hydroxylgruppen aufweisendes Addukt aus 66 Gew.-Teilen des bereits genannten trifunktionellen Polyetheralkohols des Molekulargewichts 450 und 20 Gew.-Teilen Polypropylenglykol des Molekulargewichts 2 000 und 7 Gew.-Teilen Isophorondiisocyanat.

Komponente II

Isocyanatgruppen enthaltendes Addukt aus 14 Gew.-Teilen des bereits genannten trifunktionellen Polyetheralkohols des Molekulargewichts 450 und 55 Gew.-Teilen Isophorondiisocyanat.

Komponenten I und II werden unter Zugabe von 0,5 % eines handelsüblichen Verlaufsmittels im Gew.-Verhältnis 100 : 74 vermischt. Die Viskosität der Beschichtungsmasse B3 beträgt 3 700 mPas/23 °C.

Beispiele

In den nachstehend tabellarisch zusammengefaßten Beispielen werden Fensterglasplatten der Abmessung 20 × 30 × 0,6 cm in herkömmlicher Weise beschichtet (Kolonne (A)). Hierzu werden die Platten zunächst bei Raumtemperatur in eine 1 %ige Lösung von γ-Aminopropyl-trimethoxysilan in einem Gemisch aus Isopropanol und Toluol im Verhältnis 1 : 1 getaucht und nach kurzzeitigem Abtropfen während 10 Minuten bei 100 °C getrocknet. Die dieserart mit einer Silan-Schlichte versehenen Glasplatten werden anschließend bei Raumtemperatur durch Rakeln mit den beschriebenen Beschichtungsmassen beschichtet. Diesen werden, um die Härtungsreaktion zu katalysieren, folgende Mengen Dibutylzinndilaurat zugesetzt :

Beschichtungsmasse B1 + 0,05 %
Beschichtungsmasse B2 + 0,01 %
Beschichtungsmasse B3 + 0,05 %

Die Aushärtung der Beschichtungsmassen erfolgt durch 20-minütiges Erhitzen auf 120 °C. Die Trockenfilmstärke der Beschichtungsmasse beträgt 0,15 mm.

Unter Verwendung der vorstehend genannten Ausgangsmaterialien werden parallel nicht mit Silan vorbehandelte Fensterglasplatten der genannten Abmessung erfindungsgemäß beschichtet. Die erfindungsgemäßen Beschichtungsmittel werden durch Rakeln aufgetragen. Die Trockenfilmstärke der Grundlackschicht beträgt jeweils 0,01 mm. Die Schichtdicke der Beschichtungsmassen liegt jeweils bei 0,15 mm. Der Auftrag der Beschichtungsmittel erfolgt jeweils bei Raumtemperatur. Vor dem Auftrag der Beschichtungsmassen wird jeweils die Grundlackschicht durch 60-minütiges Stehen bei Raumtemperatur physikalisch getrocknet. Die Aushärtung der Beschichtungsmassen erfolgt durch 20-minütiges Erhitzen auf 120 °C. Die erfindungsgemäß erzielten Ergebnisse werden in den Spalten B wiedergegeben.

Die Bestimmung des Durchhärtungsgrades erfolgt an den beschichteten Glasplatten. Zur Bestimmung der Dehnung, der Reißfestigkeit und des Weiterreißwiderstandes werden entsprechende freie Filme herangezogen, die auf Polyolefinunterlage entsprechend hergestellt werden und eine Gesamtschichtdicke von 0,15 mm (herkömmliches Verfahren) bzw. 0,16 (erfindungsgemäßes Verfahren) mm aufweisen.

| Arbeitsweise | A | B | A | B | A | B |
|---|---|---|---|---|---|---|
| Silan-Vorbehandlung der Glasoberfläche | + | - | + | - | + | - |
| Grundlack | - | G 1 | - | G 2 | - | G 3 |
| Beschichtungslack | B 1 | B 1 | B 2 | B 2 | B 3 | B 3 |
| % Beschleuniger in der Beschichtungsmasse (Dibutylzinndilaurat) | 0,05 | - | 0,01 | - | 0,05 | - |
| Standzeit der Beschichtungsmasse (h) | 1 | 100 | 6 | 100 | 5 | 100 |
| Durchhärtungsgrad (Bleistifthärte) nach dem Einbrennen (20 min/120 °C) | HB | HB | HB | B | HB | HB |
| Dehnung nach DIN 53 455 (%) | 15 | 110 | 43 | 94 | 146 | 200 |
| Reißfestigkeit nach DIN 53 455 ($N/mm^2$) | 18,9 | 25,6 | 19,0 | 27,5 | 12,1 | 18,5 |
| Weiterreißwiderstand nach DIN 53 315 (N/mm) | 50,5 | 62,5 | 44,3 | 47,2 | 37,1 | 50,9 |

**Anspruch**

Verfahren zur splittersicheren Beschichtung von Glasoberflächen durch Auftragen eines physikalisch trocknenden, einen Silan-Haftvermittler enthaltenden Grundlackes und anschließende Beschichtung der so hergestellten, physikalisch getrockneten Grundlackschicht mit einem lösungsmittelfreien bzw. -armen, ein zu einem Polyurethan ausreagierenden Zweikomponenten-System als Bindemittel und gegebenenfalls übliche Hilfs- und Zusatzmittel enthaltenden Beschichtungsmittel, dadurch gekennzeichnet, daß der Grundlack

a) als Bindemittel einen in Lacklösungsmitteln löslichen Polyurethan-Polyharnstoff mit linearem Molekularaufbau und außerdem

b) mindestens einen die zur Aushärtung des Beschichtungsmittels führende Isocyanatadditionsreaktion beschleunigenden Katalysator

enthält.

**Claim**

A process for the shatterproof coating of glass surfaces by applying a physically drying priming lacquer containing a silane adhesion promoter and subsequently coating the physically dried layer of priming lacquer thus produced with a solvent-free or substantially solvent-free coating composition containing a two-component system reacting to form a polyurethane as binder and, optionally, standard auxiliaries and additives, characterised in that the priming lacquer contains.

a) as binder a polyurethane polyurea which has a linear molecular structure and which is soluble in lacquer solvents and in addition

b) at least one catalyst which accelerates the isocyanate addition reaction leading to the hardening of the coating composition.

**Revendication**

Procédé de revêtement sans éclats de surfaces de verre par application d'un vernis de base à séchage physique, contenant un agent d'adhésivité du type silane, et enduction subséquente de la couche de vernis de base à séchage physique ainsi produite avec une composition d'enduction dépourvue de solvant ou pauvre en solvant contenant comme liant un système à deux composants réagissant en formant un polyuréthane et, le cas échéant, des adjuvants et des additifs classiques, caractérisé en ce que le vernis de base contient

a) comme liant une polyuréthanne-polyurée soluble dans les solvants du vernis, à édifice moléculaire linéaire et en outre

b) au moins un catalyseur qui accélère la réaction d'addition d'isocyanate conduisant au durcissement de la composition d'enduction.